# EUROPEAN PATENT APPLICATION

(11) **EP 4 253 331 A1**
(43) Date of publication of application: **04.10.2023**
(21) Application number: 22166387.5
(22) Date of filing: 01.04.2022
(51) Int. Cl.: C02F 1/00, H04L 67/12, H04W 4/38, G06Q 50/06, G01D 21/00

(54) **SYSTEM AND RECORDING DEVICE FOR FLUID FLOW MANAGEMENT**

(71) Applicant: Droople SA, 1070 Puidoux (CH)
(72) Inventor: Bouzerda, Ramzi, 1185 Morges (CH)
(74) Representative: P&TS SA (AG, Ltd.)

(57) **Abstract**

The present invention relates to a management system (100) adapted for managing a distributed fluid or the corresponding distribution installation. The management system comprises at least one sensor (C1, C2, Cn), at least one recording device (1) connected to said at least one sensors (C1, C2, Cn), a storage centre (2), and a computing means (4). The recording device (1) comprises a communication means (14) adapted to transmit at least some data collected from the sensors to the storage centre (2). The computing means (4) are adapted to compute data stored in said storage centre (2) so as to generate reports. The present invention also relates to a recording device (1) used in the system. It further relate to a method of fluid distribution management.

## Description

### Technical domain

The present invention concerns a recording device adapted to collect and record data related to the flow and some other parameter of various fluids such as water or gas. It relates in particular to a connected or connectable device adapted to collect and/or record such data and send the same to a remote storage centre or to an external reading device or both. The present invention further relates to a management system adapted to accurately manage the consumption of a distributed fluid, and/or manage the maintenance of the corresponding installation, comprising at least one of such a recording device. The present invention further relates to a method of managing the distribution of a fluid through a given distribution installation, in particular a water distribution or gas supply installation.

### Related art

Water meter devices are well known for water distribution installations, at least for billing purpose. By this mean, a global amount of water can be measured at regular periods. A corresponding bill can be established. Similar devices exist for the gas distribution. New generation of metering devices can also be connected so as to send the corresponding data to a remote centre, avoiding regular displacement of a technician for the reading of the values. Such metering devices, however, do not provide accurate understanding of the consumption of water or gas. They provide global values of the fluid consumption and do not allow to determine the flow specific of each of the equipment and devices of the installation.

Water or gas installations can involve a large number of different equipment such as toilettes, heaters, softeners, filters, pumps, faucets tap, and so on. Each one of those equipment can need specific maintenance. The cumulated flow consumption, or the intensity of use, thus needs to be accurately determined for each of these equipment to properly maintain it.

There is thus room for improving the record of fluid flow at each of the equipment of an installation.

### Short disclosure of the invention

An aim of the present invention is the provision of a recording device allowing to collect and/or record data related to the fluid flow at each equipment of a given distribution installation.

It is a further object of the present disclosure to provide a recording device adapted to collect and/or record several types of data, providing from various sensors. The data can for example relate to the flow rate, the cumulative flow, an average flow, the temperature, the pressure of the fluid, the pH of the fluid where applicable, the salinity or the hardness of the fluid where applicable, the conductivity of the fluid where applicable, as well as any variations thereof. Such recording device can thus be adapted to various applications, depending on the type of data it collects.

It is another aim of the present disclosure to provide a connected or connectable recording device, adapted to send data to a remote storage centre or to a reader.

It is a further aim of the present disclosure to provide a management system comprising such a recording device and adapted to determine on real time the flow consumption of each equipment of an installation.

It is a further aim of the present disclosure to provide a method of maintenance of an installation comprising various specific equipment, based on the data collected by the recording device here described.

According to the invention, these aims are attained by the object of the independent claims, and further defined by the dependant claims.

In particular, the management system of the present disclosure comprises at least one sensor arranged at a distribution point of a fluid distribution installation. Preferably, several relevant distributions point of a given installation are provided with at least one sensor. The system further comprises a recording device, preferably several recording devices, arranged at a relevant distribution point or relevant distribution points of the installation, and connected to the corresponding sensors. The system further comprises a storage centre, adapted to receive the data from the relevant recording devices, preferably a remote storage centre. It further comprises a computing means, or a computing station adapted to compute the consolidated data of the storage centre. The recording device comprises communication means adapted to transmit at least some data collected from the sensors.

The sensors of the system are adapted to sense, either individually or in combination, any parameter of a fluid, in particular of a fluid circulating through a installation. The fluid parameters can one of pressure, conductivity, flow rate, pH, temperature, hygrometry, total dissolved solid, turbidity, viscosity, colour, hardness, bacterial contamination, chemicals, and heavy metals. The considered fluid can be selected among a liquid or a gas, such as drinkable water, dirt water, oxygen, nitrogen, propane, butane, oil, fuel, and air.

A distribution point can be selected among a final distribution point or an internal distribution point of the corresponding installation. It can be for example a flush, a faucet tab, a heater, a boiler a showerhead, or a connection point of an equipment selected from a filter, a reverse osmosis station, a softener station.

The system can further comprise one or several external readers, adapted to read at least some of the data stored in the recording devices.

A recording device can comprises a fixation mean, at least one connection port, an internal power source, a communication means, a memory such as a RAM and the necessary electronic means. A recording device can furthermore receive data from a storage centre a computing station or an external device such as laptop.

The method according to the present disclosure comprises the steps of providing a recording device, preferably several recording devices at one or more specific distribution points of a distribution installation, or of several distribution installations. It further comprises the step of matching the recording device or the recording devices with the corresponding sensors. It further comprises the steps of collecting data from the sensors, transmitting the collected data to a storage centre so as to generate primary data, and computing the primary data so as to generate secondary data. Based on the secondary data, a report can be provided.

The method may further comprise a step of updating and/or upgrading the recording devices of the system. It may further include regularly checking the status of the communication between the recording devices and said storage centre.

With respect to what is known in the art, the invention provides the advantage of an accurate analysis of the fluid consumption.

### Short description of the drawings

Exemplar embodiments of the invention are disclosed in the description and illustrated by the following drawings :
- Figure 1 : Schematic view of the system according an embodiment of the present invention,
- Figures 2a, 2b, 2c: Examples of arrangement of a recording device to a distribution installation according to an embodiment of the present invention,
- Figures 3a, 3b, 3c: Examples of arrangement of a recording device to a distribution installation according to another embodiment of the present invention,
- Figure 4: example of a combination of equipment according to the present invention,
- Figure 5: schematic representation of a recording device according to the present disclosure,

### Examples of embodiments of the present invention

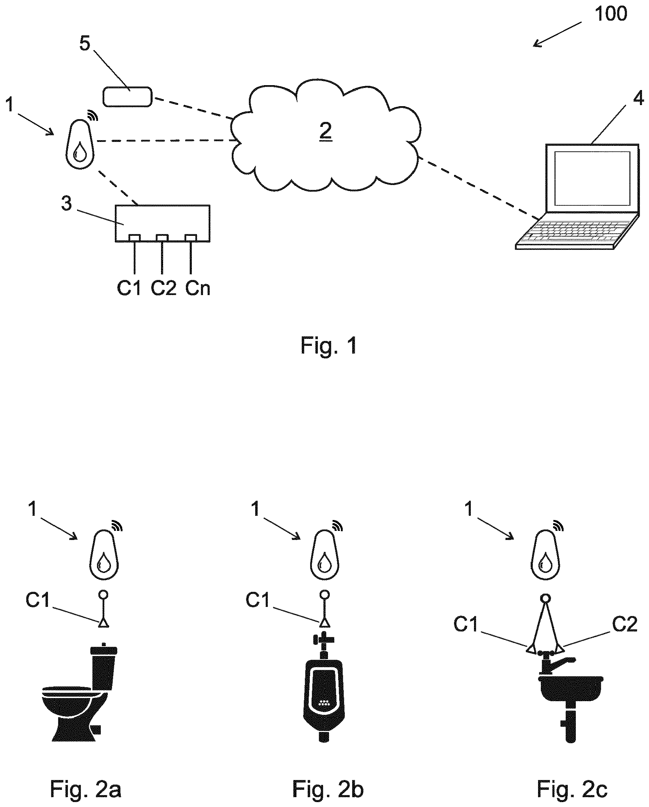

With reference to figure 1, a flow management system 100 is hereby described. It comprises a recording device 1, which is connected to one or more sensors C1, C2, Cn, either directly or via a hub 3 so as to be able to collect data sensed by these one or more sensors. The connection to the sensors C1, C2, Cn is preferably a mechanical connection, such as a wire connection or a plug or any suitable mechanical means. This however does not excludes that a wireless connection can be established with sensors properly equipped with suitable communication means. The collected data can be stored in the recording device 1 for a predetermined period of time and then sent to a remote storage centre 2. Alternatively, the data is immediately sent to the storage centre 2. Alternatively, the data is recorded into the recording device 1 until a reader is placed nearby so that data can be read. Such a reader can be for example an external reader 5 connectable to the recording device 1 by a user or technician, to download the data from the recording device 1. The external reader 5 can be wired or connected wireless to the recording device 1.

The storage centre 2 is adapted to receive and store cumulated data sent by one or several recording devices 1. The storage centre 2 can be for example a cloud arrangement, a remote server, or any suitable data storage architecture. The storage centre 2 can be localised at a single geographic location or spread at different geographical locations which are in communication with each other so as to exchange suitable data. The data can be transmitted to the storage centre 2 by any suitable transmission means such as radio communication, internet communication, a mobile communication arrangement using for example the 4G or 5G protocols, or any other adapted technical means. Preferably, the transmission of the data is secured by restricted access, or by encryption means, or a combination thereof. Preferably, the management system 100 denotes or comprises a private communication system. Alternatively or in addition, the management system 100 can be open, at least partly, to specific additional users. In a preferred arrangement, the communication of the data between the recording device 1 and the storage centre 2 is made according to a Low Power Wide Area (LPWA) networking protocol, adapted to the internet of thinks. Preferably, the communication takes advantage of the Long Range characteristics of the communication protocols, such as those offered by the LoRaWan^{®} communication architecture.

According to a specific arrangement, the data collected by the recording device 1 are not directly sent to the storage centre 2 but transmitted to the external reader 5. The data read by the external reader 5 can then be transmitted to the storage centre 2, either wireless or by mean of a wired connection, from the reader. For example, a user or a technician can be physically present at the location of the recording device 1 to read the data by means of the external reader 5. The user can afterward move toward the storage centre 2 and transfer the data read from the recording device 1. By this way, only an authorized person having an external reader 5 can access the data or transmit the data.

According to an embodiment, an external reader 5 can denotes a mobile phone or another terminal of a communication network, which is equipped with suitable software, adapted to read the collected data, or some of the collected data.

According to another arrangement, both recording device 1 and external reader 5 can submit data to the storage centre 2. Data transferred directly to the storage centre 2 can be the same or of the same type as those transferred by the means of the external reader 5. Alternatively, some data can be directly transmitted to the storage centre 2, while different data needs to be collected by an external reader 5, depending on the confidentiality of the data or whether a physical visual check needs to be performed by a technician, or depending on any different need.

It is understood that the recording device 1 collects data from a limited number of sensors to which it is connected. For example, a recording device 1 can be connected to 1, 2, 3, or 4 sensors or to an assembly of less than 8 or 12 sensors depending on the needs. Thus, it preferably collects data at a specific location or at specific equipment of an installation. It is also understood that a recording device 1 records a small amount of data related for example to a predetermined time period, such as a minute or an hour or a day. The memory of the recording device 1 is preferably refreshed after each time the data are read by an external reader 5 or transmitted to a storage centre 2, so as to free memory space to collect and record new data.

The storage centre 2 preferably receives data from a plurality of recording devices 1. It can in addition receive data from other devices, different from the recording device 1 of the present invention. The data received by the storage centre 2 can be organized so that the recording time and location is at least retrievable. For example, each recording device 1 of a plurality of recording devices 1 can be identified and recognizable, so that it is associated with the corresponding data. The data stored in the storing centre 2 can denote raw data, or primary data PD, meaning that no computing operations, or minimal computing operations are provided. Preferably, the storage centre 2 receives data from several distribution installations, each one comprising several recording devices 1. All the distribution installations may be on the same nature, for example, dedicated to water distribution, or to gas supply, or to any other specific fluid. For example, a storage centre 2 may be dedicated to installations adapted to supply a gas such as propane or butane, used to heat the buildings. Installations related to oxygen supply for hospitals, or nitrogen supply for industries or any other gases can also be considered. Distribution installations can also relate to water distribution for domestic consumption at home, or for industries, or for any other liquids the property of which needs to be accurately managed. For example, fuel distribution to boilers can be properly managed to follow in real time the combustible consumption or potential leakage. An installation may also relate to the supplying of liquid or gas, upstream the consumption. For example, a desalination station, adapted to produce large quantities of consumable water from sea water, can be considered as an installation. An installation also denotes any installation downstream the consumption installations, such as water cleaning stations, adapted to collect dirty water and clean it up.

Alternatively, a given storage centre 2 can be adapted to store data related to different types of installations. The corresponding data can then be stored in relation with the type of installation it corresponds, and/or the geolocation of such installation. One skilled in the art understands that a storage centre 2 according to the present disclosure is flexible enough to receive and store data from very distinct and different fluid installations. A storing centre 2 may comprise several distinct storing units.

The storage centre 2 comprises or is connected to computing means 4 adapted to compute the data stored in the storage centre 2. The computing means 4 denotes any software and hardware adapted to compute data so as to characterize the consumption of the managed fluid, identify variation of consumption, comparing consumption from one site to an average consumption, identifying defects or maintenance needs of the installation, and any other analytic operations. The computing means 4 generate final data, or secondary data SD, meaning that the data generated based on the primary data PD can be exploited by a final user. Such secondary data SD can trigger or used to trigger, operations such as initiating a maintenance operation, a replacement of a device, or allow the identification of a leakage, identification of an overconsumption or a lower consumption than expected, determination of habits of a final user and any other useful information. The computing means 4 can be localized at the same place of the storage centre 2 or remote to the storage centre 2. The connection between the storage centre 2 and the computing means 4 can be of any suitable type, including wired and wireless connections. It can be of the same type of the connection between the storage centre 2 and the recording devices 1. It is preferably of a different type, better adapted for the computing of a large amount of data. The computing means 4 can allow specific requests on demand to compute certain primary data PD according to certain instructions or certain computing methods. Some requests can be triggered manually on demand or to produce a specific secondary data SD. Alternatively or in addition, some routine requests can be run on an automatic basis. Alternatively or in addition, the computing means 4 may comprise or be connected to one or more deep learning module, or any suitable artificial intelligence program. The computing means 4 preferably allows comparisons and computations of data originating from different installations and/or from different installation types where necessary. Benchmarking operations can be made. Also, previsions related to some maintenance operations can be established based on average data collected from several installations.

The secondary data SD can be stored in the storage centre 2 so as to be accessed by an end user. Access to secondary data SD is preferably limited to specific end users such as customers, or consumer of the managed fluids, or a provider of the managed fluid, or a combination thereof. Alternatively, the secondary data SD can be directly transmitted to such end users. The transmission of data can be periodical, for example on a monthly basis or daily bases depending on the needs or depending on the type of end users.

Some data such as the secondary data SD is provided to the end user by means of any suitable means, such as a terminal 5. Such a terminal 5 can be a cellular phone, a tablet, a personal computer or any equivalent means adapted to communicate data to the end user. The terminal may be equipped with dedicated software such an specific application. Interactive functions allowing the end user to set some preferences can be included in the software.

A "end user" denotes any party having interest in receiving a certain amount of data. Several types of end users can be determined for a managed installation. For example, people using the fluid installation, such as those leaving in the corresponding building, can represent a part of the end users. The provider of the fluid can also be part of the end users. Maintenance teams can also be part of the end users. Specific secondary data SD may be transmitted to each end user depending on its specific needs. Thus data related to a given installation may differ from one end user to another one. Some data, related for example to a geographical area, or an ensemble of specific installation, may be publicly disclosed, meaning that it is available to people other than the final users.

The recording device 1 is adapted to collect different types of information at a given location. Figures 2a, 2b, 2c, show examples of specific locations where a recording device 1 can be placed. A recording device 1 is for instance placed on a pipe of fluid distribution at a final point of distribution, such as a faucet tab, a toilet, a heater or any other distribution means. One or several sensors C1, C2, Cn are arranged on each of these final distribution points. Such sensors can be selected from different types. For example a flow rate sensor can be used at each of the final distribution points. Such flow sensor can be of any suitable type. A flow rate sensor can be for example of the type described in the patent application PCT/IB2021/060398, the content of which is hereby incorporated. Sensors adapted to determine the temperature can also be used. Depending on the use, pH, conductivity, pressure, and any other suitable parameter can be determined by means of an adequate sensor **C1, C2, Cn.** This is particularly convenient for water distribution installations. Sensors related to gas pressure, gas flow rate, or gas purity, can advantageously be used for gas supply installation. For example, water detection in a gas supply installation can be of interest.

A recording device 1 can collect a combination of different data determined by different sensors C1, C2, Cn. For example a recording device 1 can be connected to a temperature sensor and a flowrate sensor, so that it can determine which water flow from the cold and warm water is used at which time. Alternatively or in addition, a given recording device 1 can be connected to a flowrate sensor and to a pressure sensor so as to identify a potential defect in the distribution arrangement. Any other suitable combination is of course applicable, including combination of more than 2 censors, such as combination of 3, 4 or 5 or more different censors.

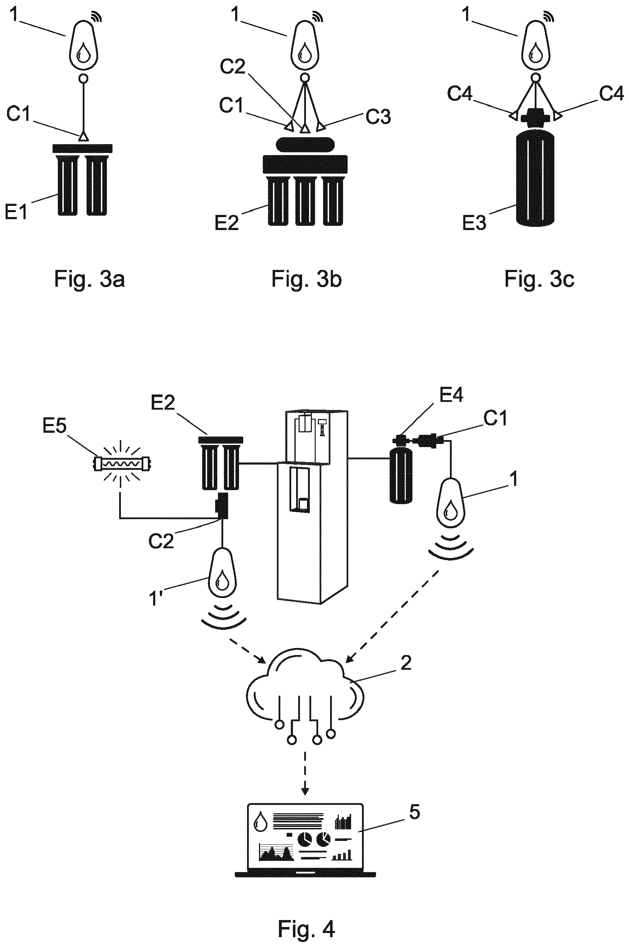

Figures 3a, 3b, 3c show example of other equipment E provided with at least one sensor C1, C2, Cn and one recording device 1. Figures 3a shows a filtration unit E1 comprising one or several filters such as carbon activated filter and sediment filter. Sensors adapted to determine the flow rate and the pressure can be combined to such filtration unit E1 so as to determine potential clogging or determine the number of cycles each of the filters have performed or can perform before a replacement or a maintenance operation. Figure 3b shows a reverse osmosis unit E2. Sensors C1, C2, Cn adapted to determine the flow rate, the pressure and/or the temperature, the conductivity of the fluid or the total dissolved solid, also known as TDS, can be arranged to the reverse osmosis unit E2. Figure 3c shows a softener station E3 comprising an ion exchange resin. Sensors adapted to determine the flow rate, the pressure and/or the conductivity can be arranged so as to manage the health of the softener station E3. Other equipment can of course be managed as described here, whether it relates to water distribution or gas distribution.

More than one recording device 1 can be arranged on a single equipment E. For example, one recording device 1 can be arranged upstream an equipment E and another one can be arranged downstream the same equipment E. Each one of an upstream and a downstream recording device 1 can be connected to one or more than one sensors. For example, a difference of flow rate between the upstream and the downstream recording devices 1 can denote a leakage within the considered equipment. Alternatively, a temperature difference between the upstream and the downstream positions can also provide suitable information. The same applies with other parameters such as pressure, pH, conductivity, etc...

It is appreciated that the type and number of the sensors C1, C2, Cn are not limited and that a variety of sensors can be matched with a recording device 1. The sensors may comprise optical means, magnetic means, electrical means, bacterial and/or chemical detection means. They can be of analogic type or digital type or a combination of both. Thus, depending on the usage, information related to the flow rate, the temperature, the pressure, the total dissolved solid (TDS), the turbidity, the contamination either chemical or biological, or bacteriological, the hygrometry or the ratio of water content, the conductivity, the fluidity, the viscosity, the density, the colour, the homogeneity, as well as the variation thereof can be collected. Specific chemical or biological contamination can thus be managed. The concentration of heavy metals, or of toxic organic compounds such as nitrates or other contaminants, or of some microorganisms such as those responsible for the legionellosis, can be detected and/or monitored.

It is further appreciated that the amount of consumption of the distributed fluid can be monitored, as well as its quality. For example, a leakage, or an abnormal consumption can be detected and the corresponding distribution point can be easily localised.

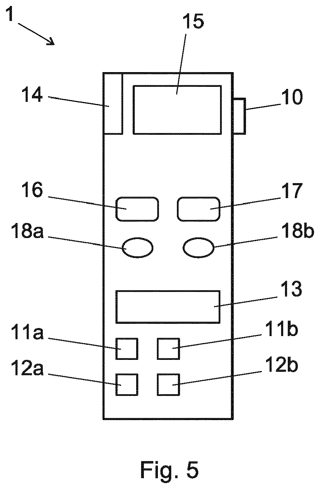

A recording device 1 according to present disclosure is better described on figure 5. It comprises a fixation means 10 adapted to arrange the recording device 1 at a position where it can collect and record the data. The fixation means 10 denotes any suitable mechanical means adapted to combine the recording device 1 to the equipment E to be managed. It can be for example a clamp, a screw, a clip, or any equivalent means. The recording device 1 comprises one or several connections ports 11a, 11b, 12a, 12b adapted to receive connection means for various sensors. The connection ports can be of digital or analog type. According to an embodiment, a recording device 1 can be provided with two digital ports 11a, **11b** and two analog ports 12a, 12b. Other combinations can of course be determined according to the needs, such as from 1 to four analog ports or from 1 to four digital ports, or more than four ports, whether analog or digital. The ports preferably denotes female connectors, such as M8 female connectors. A connection port denotes any mechanical plugging means adapted to connect one or more sensors **C1, C2, Cn.** In addition, a recording device 1 may be provided with a wireless connection means adapted to collect data from a sensor which is not close enough to be mechanically connected. For example, in a given room comprising distinct fluid distribution equipment such as a faucet tab and a toilet, all provided with at least one sensor **C1, C2, Cn,** the recording device **1** can be mechanically connected to one of these equipment and communicate with the sensors of the other equipment of the same room through a wireless means. The corresponding sensors are of course adapted for such remote communication.

The recording device **1** further comprises an internal power source **13,** such as an electrical power source. Such a power source is for example a replaceable battery or a rechargeable battery. A battery such as a lithium battery of 2600 mAh can be used. Any other suitable battery can however be considered. The recording device **1** further comprises a communication means **14** adapted to transmit collected data to the storage centre **2** and/or an external reader **5.** It can be or comprise an emitting system, a RFID device, or any equivalent means and a combination thereof. The communication means **14** may in addition be adapted to receive data from an external device or system. It can for example be adapted to receive data from the storage centre **2** or from the computing means **4,** for regular updates or regarding the protocol of communication, or for any other application. The communication means **14** can be fully integrated to the recording device **1.** Alternatively, the communication means **14** can comprise some integrated elements and one or several external elements used as a transmitter of the information. For example, a communication box or server can be installed in the building of the managed installation, so as to collect the data from all the recording devices **1** of the installation, and transmit them to the storage centre **2.** It is understood that any suitable communication arrangement can be envisaged depending on the situation.

The recording device **1** may further comprise a display **15** or any suitable means adapted to display some information to a user. The display **15** can show for example the instantaneous value of the parameter determined by one or several sensors **C1, C2, Cn.** Alternatively or in addition, the display **15** may show a selected program in a menu, or a selected sensor, or the status of the power source **13,** or the status of the communication means **14** or the communication quality, or any other suitable information. This is to say that some information of a recording device **1** can be visible directly on the recording device **1,** without need of an external reader.

The recording device **1** can comprise one or several input commands **16.** An input command can be used for selecting some items in a menu, for programming the recording device **1** or for any other suitable action necessary to make the recording device **1** properly functioning with selected sensors **C1, C2, Cn,** and/or for selected results. For example, calibration operations may be performed regarding some sensors, or threshold values may be entered into the recording device **1** to determine some detection or data collection windows, or some time range may be determined in advance to trigger and/or stop some detection or data collection. The input command **16** can be a key button or an assembly of buttons, or tactile means or equivalent means.

The recording device **1** further comprises an activation switch **17,** adapted to put it under tension or to switch it off. The recording device **1** further comprises the necessary memory **18a,** adapted to temporarily store the collected data, to store the suitable software and any other information. It further comprises the necessary electronic elements **18b** adapted to manage the different parts of the recoding device 1 such as the communication means **14,** the ports **11a, 11b, 12a, 12b,** the power level, executed programs etc...

A recording device **1** according to the present disclosure is preferably small enough to not disturb the aesthetic aspect of an installation, neither its mounting on the installation. It comprises or consists for example of a housing weighting less than 150 g, preferably less than 100 g, and more preferably less than 90 or 80 g. Also, its largest dimension is preferably below 150 mm, preferably below 100 mm. The housing can be made in any suitable material such as a polymer, a hard plastic, a metal, or a combination thereof. It can be waterproof.

For the purpose of the present disclosure, a fluid distribution installation denotes any installation adapted to distribute a fluid such as water or gas, as described above. The fluid distribution thus comprises the necessary pipes, valves, sealings, faucet, flush, showerhead, filters, heater, boiler, etc...An installation comprises at least one distribution point, preferably several distribution points, wherein a recording device 1 can be arranged. Such a distribution point may be a final distribution point, wherein a user can collect the fluid, or wherein the fluid is actually consumed. Final distribution points are typically faucet tabs, flushes, shower head, boilers and related points where the managed fluid emerges from the corresponding installation. Other distribution points such as internal distribution points may relate to connection points of some equipment E to the managed installation. Equipment typically denotes the above described equipment such as filter, reverse osmosis station, softener station, a gas desiccation station, pumps, compression system, etc.

Figure 4 discloses an example of a combination of equipment E according to the present description. It comprises a gas distribution system **E4** such as a gas container or a gas supply line. The gas distribution system **E4** comprises a first sensor adapted to collect the pressure of the gas. The first sensor is connected or combined or integrated with a device 1 according to the present disclosure. The combination of equipment comprises a filtration unit **E2** comprising a second sensor **C2.** The filtration unit **E2** is arranged on a water distribution pipe at the termination of a water distribution pipe. The second sensor is adapted to determine the flowrate of the water. The second sensor **C2** is connected or combined or integrated with a device **1'** according to the present disclosure. The device **1'** may be distinct from the device **1** and on the same nature. Alternatively, only one device **1** is connected to both first and second sensors. An additional equipment such as a UV lamp E5 can be arranged with the water distribution pipe or included in the water distribution system so that decontamination of the distributed water is provided on line. The UV lamp **E5** can be placed downstream the filtration unit **E2.** Such a combination of equipment allows for example production sprinkle water on demand by mixing gas and water. Data related to at least the gas pressure and the flow rate of water, sensed by the first and the second sensors is transferred to the storing centre 2. The necessary computing means **4** computes the received data and transmits secondary data **SD** to the end user through a suitable terminal **5.**

The present disclosure also relates to a method of managing the fluid distribution and/or the corresponding installation. The fluid management method comprises the step of providing at least one recording device **1** onto at least one distribution installation at a specific distribution point. Such a distribution point may be selected from a final distribution point or an internal distribution point, as above described. Preferably, several recording devices **1** are arranged at several different distribution points of at least one installation.

The method comprises the step of matching each one of the recording devices **1** to one or several sensors **C1, C2, Cn.** The matching preferably involves a connection such an electrical connection to each of the considered sensors. The connection is made through the corresponding ports **11a, 11b, 12a, 12b** of the recording device or through a remote connection means such as a Bluetooth or Wi-Fi. The connection can be made alternatively or in addition through a hub **3,** allowing more sensor connections. The matching step may also comprise some programming operations such as calibration operations, or specific settings related to the sensors. Such programming operations may be done automatically. For example, a sensor may by automatically recognized by the recording device **1.** The digital or analog nature of the connection can also be automatically recognized. In case a hub **3** is used, the recording device **1** can automatically switch to a digital mode.

Once the recording device **1** or all the recording devices 1 is/are connected to the corresponding distribution points and matched with the corresponding sensors **C1, C2, Cn,** and that they are properly activated, the step of collecting data is initiated. The data sensed by the corresponding sensors may be collected on a continuous way and the corresponding value accumulated in the memory **18a** of the corresponding recording device **1** or directly transmitted to the storage centre **2.** Alternatively, the data may be collected at predetermined a time frequency. For example, a collection of data can be triggered by the recording device 1 each few minutes, such as each minute or each five minutes, or each 10 minutes. The frequency of data collection is of course adaptable according to the needs. In case a given recording device 1 is connected to several sensors C1, C2, Cn, the collection frequency can be the same or can differ from one sensor to another one. Alternatively, the data collection can be triggered once a change of a value is sensed by a sensor.

The method further comprises a step of transmitting the data collected from the sensors **C1, C2, Cn** to the storage centre **2.** The data can be transmitted at a predetermined frequency. For example, data can be directly sent at the same frequency than the data collection frequency. This means than each time the recording device **1** collect some data, it transmit the same to the storage centre **2.** Alternatively, the collected data is sent at a lower frequency than the collection frequency so as to limit the energy consumption. For example, data can be transmitted every second or third data collection cycles. The corresponding data is temporarily memorised in the corresponding recording device **1.** Alternatively, all the data collected is stored in the recording device 1 until a specific transmission command is activated, or until a given memory space is occupied, or after any other relevant event. In case the communication means are not able to transmit the data, it is temporarily recorded in the recording device **1** until is can be sent. Alternatively, the step of transmitting the data is performed by means of an external reader (5), which operates as an intermediate device to transfer the data to the storage centre **2.** In that case transmission frequency is significantly lower than before. For example, the data can be transmitted every day or every week or every months.

The method of the present disclosure comprises a step of storing the data in the storage centre 2 so as to generate primary data **PD** or primary data sets. Such primary data **PD** may correspond to the data originating from several recording devices (1) arranged on one installation, or more than one installation. Preferably, the primary data comprises a consolidated set of data originating from a large number of installations, being of the same type or of different types. Different data sets can be organized. For example, all flow rates from all the faucet tabs of all the managed installation can form a data set. Data related to specific equipment such as softeners, filters, can also be organised in data sets. Alternatively or in addition, dataset related to some specific parameters, such as the temperature or the pressure, can be organised. It is understood that the primary data **PD** can be organised and managed according to various suitable ways. The primary data **PD** comprises at least the parameters and the corresponding sensed values over the time and the precise location of the measurement. The location of the measurement can be for example a distribution point of an installation. The primary data can comprise for example information related to the identity of the corresponding recording device **1.**

The method further comprises a step of computing the primary data **PD** so as to determine secondary data **SD,** usable by a final user. Such secondary data **SD** denotes any kind of exploitable data. For example, an abnormal cumulated consumption of a fluid at a given distribution point can determine a deficiency of the corresponding equipment or a misuse of the fluid by a final user, or any kind of defect. The flow rate can be directly determine with an appropriate sensor. It can be determined that a continuous low flow rate at a given distribution point corresponds to a fluid leakage. Data determined at a given distribution point can be compared to corresponding average data of several installations. The provision of secondary data **SD** can involve various calculation processes, including linear regression, comparison, ponderation, variation rates, mobile mean values, and any other suitable calculation. Alternatively or in addition, data or part of the data can be computed by artificial intelligence softs, and/or deep learning modules, or any other self-adaptable computing means. The step of computing the primary data to provide secondary data **SD** is performed at least partly by the computing means **4** of the management system **100.**

The method comprises a step of providing at least one report based on the secondary data **SD.** A given report comprises for example a selection of predetermined parameters at predetermined distribution points, as well as there variations over a predetermined period of time. For example, a report can determine the monthly consumption of a fluid at the selected distribution point of an installation, or the variation thereof compared to previous values. A report may further determine an abnormal increase of the fluid consumption at predetermined distribution point and alert on a possible failure or leakage. Depending on the end user, several specific reports can be provided, having each specific parameters and/or distribution points considered. For example the occupants of an habitation may receive a periodical report on their domestic water consumption at each final distribution point of their water installation. A water provider may receive a different report related for example to the number of time a flush is activated or the shower is used, helping to determine the number of persons leaving in the corresponding habitation. An equipment provider may receive a report related on the amount of water having crossed a given equipment such a filtration station or a reverse osmosis station, so as to determine a maintenance or a consumable replacement operation. Depending on the end user, a report may in addition comprises advises or specific instructions helping for example at reducing the consumption of the distributed fluid, or advertise on more performant equipment.

The present method may in addition comprise a step of updating or upgrading one or several recording devices **1.** Updating operations can relate to some soft correction or improvement of the corresponding recording devices **1,** or some memory cleaning operations, or some refreshing functions or any other routine maintenance operations on the recording devices **1.** Upgrading operations can comprise the upload of new functions, or improvement of existing functions, or any other operation aiming at improving the performances of the recording devices **1.** These updating and upgrading operation can be performed remotely from the computing means **4,** or from the storage centre **2,** or from the external reader **5,** or from a mobile computer, or from another dedicated remote centre. The communication means **14** of the corresponding recording devices **1** can be used to perform such updating and upgrading operations. Alternatively, a wired connection can be established to this end, in particular when an external reader is used.

The method of the present disclosure further comprises the step of regularly checking the status of the communication between the recording devices **1** and the storage centre **2.** A signal may be sent to the recording devices **1** to check that the communication means are operable.

### reference symbols in the figures

- 1: Recording device
- 10: Fixation mean
- 11a, 11b: Digital connection ports
- 12a, 12b: Analog connection ports
- 13: Power source
- 14: Communication means
- 15: Display
- 16: Input command
- 17: Activation switch
- 2: Storage centre
- 3: Hub
- 4: Computing means
- 5: External reader
- PD: Primary data
- SD: Secondary data
- E, E1, E2, E3, E4, E5: Equipment

## Claims

1. A management system (100) adapted for managing at least one distributed fluid or the corresponding distribution installation or both, wherein said distribution installation comprises at least one distribution point, said management system comprising :
- at least one sensor (C1, C2, Cn) arranged at said at least one distribution point,
- at least one recording device (1) arranged at said at least one distribution point and connected to said at least one sensors (C1, C2, Cn) so as to receive and collect the corresponding data,
- a storage centre (2), and
- a computing means (4),
wherein said recording device (1) comprises a communication means (14) adapted to transmit at least some data collected from said sensors to the storage centre (2), and wherein said computing means (4) are adapted to compute data stored in said storage centre (2) so as to generate a report.

2. System according to claim 1, wherein said at least one sensors is selected among sensors or a combination of sensors adapted to sense parameters of a supplied fluid.

3. System according to claim 2, wherein said fluid parameter is selected among pressure, conductivity, flow rate, pH, temperature, hygrometry, total dissolved solid, turbidity, viscosity, colour, hardness, bacterial contamination, chemicals, and heavy metals.

4. System according to one of claims 1 to 3, wherein said at least one distribution point is a final distribution point or an internal distribution point of the corresponding installation.

5. System according to one of claims 1 to 4, wherein said at least one distribution point is selected from a flush, a faucet tab, a heater, a boiler a showerhead, or a connection point of an equipment selected from a filter, a reverse osmosis station, a softener station.

6. System according to one of claims 1 to 5, wherein said storage centre (2) is selected from a cloud arrangement or a remote server.

7. System according to one of claims 1 to 6, further comprising one or several external readers (5) adapted to read at least some of the data stored in said at least one recording device (1) or adapted to upload some data, such as updating or upgrading data, into the at least one recording device (1).

8. System according to one of claims 1 to 7, wherein said recording device (1) comprises a fixation mean (10) adapted to arrange said recording device at a distribution point of an installation, at least one connection port (11a, 11b, 12a, 12b) adapted to receive data from at least one sensor (C1, C2, Cn), an internal power source (13), a communication means (14), a memory (18a) adapted to temporarily store data collected from said one or more sensors, and electronic means (18b).

9. System according to one of claims 1 to 8, wherein said at least one recording device (1) is adapted to receive some data from one or more of the storage centre (2), the computations means (4) and the external reader (5).

10. A method of managing at least one fluid distribution installation, said method comprising the steps of:
- providing one or more recording device (1) at one or more specific distribution points of said at least one fluid distribution installation,
- matching each one of the recording devices (1) to one or several sensors (C1, C2, Cn),
- collecting data from said one or several sensor by means of said one or more recording device (1),
- transmitting the collected data to a storage centre (2) so as to generate primary data (PD) or primary data sets,
- computing said primary data (PD) or primary data sets by means of a computing means (4) so as to generate secondary data (SD), and
- establishing one or several reports based on the computed secondary data (SD).

11. Method according to claim 10, further comprising one or more steps of updating and upgrading at least one of the one or more recording devices (1).

12. Method according to one of claims 10 or 11, further comprising a step of regularly checking the status of the communication between said one or more recording devices (1) and said storage centre (2).

13. System according to one of claim 1 to 9 or method according to one of claims 10 to 12, wherein said installation denotes a fluid distribution installation adapted to supply or transfer or treating a fluid selected from a liquid or a gas, such as drinkable water, dirt water, oxygen, nitrogen, propane, butane, oil, fuel, and air.

14. A recording device (1) adapted to collect data from one several sensors of a system of claims 1 to 9, said recording device (1) comprising a fixation mean (10) adapted to arrange said recording device at a distribution point of an installation, at least one connection port (11a, 11b, 12a, 12b) adapted to receive data from at least one sensor (C1, C2, Cn), an internal power source (13), a communication means (14), a memory (18a) adapted to temporarily store data collected from said one or more sensors, and electronic means (18b).
